Europäisches Patentamt

European Patent Office

Office européen des brevets

(11) Veröffentlichungsnummer: **0 137 930**
A2

(12) ## EUROPÄISCHE PATENTANMELDUNG

(21) Anmeldenummer: 84108902.2

(22) Anmeldetag: 27.07.84

(51) Int. Cl.⁴: **C 09 D 5/00,** C 09 D 3/733,
B 60 J 1/00, B 64 C 1/14

(30) Priorität: 14.09.83 DE 3333165
22.03.84 DE 3410502
28.04.84 DE 3415974

(43) Veröffentlichungstag der Anmeldung: 24.04.85
Patentblatt 85/17

(84) Benannte Vertragsstaaten: **CH DE FR GB IT LI SE**

(71) Anmelder: **DORNIER SYSTEM GmbH, Postfach 1360,
D-7990 Friedrichshafen (DE)**

(72) Erfinder: **Scherber, Werner, Dr.Dipl.-Phys., Unterer
Höhenweg 22, D-7775 Bermatingen (DE)**
Erfinder: **Schröder, Hans Wolfgang, Dr. Dipl.-Phys.,
Kupferbergstrasse 27, D-7997 Immenstaad (DE)**

(74) Vertreter: **Landsmann, Ralf, Dipl.-Ing., Kleeweg 3,
D-7990 Friedrichshafen 1 (DE)**

(54) **Schutzüberzug oder Fenster.**

(57) Schutzüberzug oder Fenster für Infrarotgeräte für das
dritte atmosphärische Fenster (8–13,5 μm) als Regen-
Erosionsschutz an Fluggeräten oder als Feuchtigkeitsschutz an Schiffen, bestehend aus infrarotdurchlässigem thermoplastischen Kunststoff.

EP 0 137 930 A2

DORNIER SYSTEM GMBH
7990 Friedrichshafen

Reg. S 455 I/477

Schutzüberzug oder Fenster

Die Erfindung betrifft einen Schutzüberzug oder ein Fenster
für Infrarotgeräte für das dritte atmosphärische Fenster
(8 - 13,5 /um) als Regenerosionsschutz an Fluggeräten oder
als Feuchtigkeitsschutz an Schiffen.

Infrarotsensoren haben eine große Bedeutung im Bereich der Inframilitärischen Aufklärung und der Zielerfassung. Dies gilt in
zunehmendem Maße auch für das dritte atmosphärische Fenster
im fernen Infrarot (8 - 13,5 /um), da in diesem Wellenbereich Objekte mit Temperaturen nahe um dem Umgebungstemperaturbereich durch die von ihnen emittierte Wärmestrahlung sichtbar gemacht werden können.

Vorwärtsblickende Infrarotsysteme von Flugzeugen und Flugkörpern und Infrarotsysteme an Schiffen wie Infrarotsehrohre
von U-Booten oder Nachtsichtgeräte auf Überwasserschiffen
müssen gegenüber Umgebungseinflüssen (Regenerosion oder Seewasser) geschütz werden. Dies erfolgt üblicherweise durch
Abdeckungen (IR-Fenster, IR-Dome). Da die meisten Festkörper

- 2 -

im Wellenlängenbereich von 8 - 13, 5 $\mu$m undurchsichtig sind, sind nur sehr wenige Materialien als Fensterwekstoffe geeignet.

In Frage kommen Germanium, Zinksulfid, Galliumarsenid und Zinkselenid. Nachteilig bei diesen Materialien ist ihre geringe Regen-Erosionsbeständigkeit, die einen Allwettereinsatz in vielen Fällen praktisch ausschließt. Dies gilt insbesondere für Zinkselenid, dem Werkstoff, der wegen geringer Transmissions- und Absorptionsverluste im Wellenlängenbereich von 8 - 13, 5 $\mu$m für IR-Fenster besonders gut geeignet ist. Hier liegt die Beregnungszeit, nach der die IR-Transmission um 50 % abgesunken ist, für übliche Testbedingungen (Geschwindigkeit 0, 68 Mach, Regenintensität 25 mm/h) bei einigen 10 s.

Polyurethanbeschichtungen, wie sie zum Schutz von glasfaserverstärkten Kunstoffen eingesetzt werden, haben demgegenüber ca. hundertfach höhere Standzeiten. Sie sind jedoch nicht infrarotdurchlässig und daher für die gegebene Aufgabe nicht geeignet.

Bei Sizilium, einem bewährten IR-Fensterwerkstoff für das mittlere Infrarot ist die 50 % Transmissionszeit ca. 1000-fach höher als bei Zinkselenid, jedoch ist Sizilium im fernen Infrarot nicht

- 3 -

mehr transmittierend, also ebenfalls nicht mehr für die gestellte Aufgabe zu verwenden. Für den fernen Infrarotbereich gibt es bisher lediglich Materialien mit geringer Regen-Erosionsbeständigkeit, die im Allwetterbetrieb selbst für nur mäßig schnell fliegendes Fluggerät nicht geeignet sind.

Aufgabe der Erfindung ist es, einen Schutzüberzug oder ein Fenster für Infrarot-Geräte für das dritte atmosphärische Fenster zu schaffen, von dem die Geräte zuverlässig vor Regenerosion, Feuchtigkeit oder Seewasser geschützt werden.

Diese Aufgabe wird erfindungsgemäß gelöst von einem Schutzüberzug oder einem Fenster aus einem infrarotdurchlässigen thermoplastischen Kunstoff.

Ausbildungen der Erfindung sind Gegenstände von Unteransprüchen.

Thermoplaste sind bisher als Werkstoffe für die Außenhaut von schnellen Fluggeräten nicht gebräuchlich. Es wurde gefunden, daß die Thermoplaste eine ausreichende Regenerosionsbeständigkeit für die Verwendung an schnellen Fluggeräten aufweisen. Die Erfindung erlaubt erstmals den Allwettereinsatz von vorwärtsblickenden Infrarotsystemen, die auch im dritten atmosphärischen Fenster arbeiten, an rasch fliegendem Fluggerät.

Die erfindungsgemäßen Materialien schützen die empfindlichen Infrarot-Komponenten mechanisch und vor chemischen Angriffen wie z.B. vor korrosivem Seewasser. Die Materialien schützen die Infrarot-Komponenten auch vor Feuchtigkeit. Die glatten Oberflächen der Materialien erfordern keine speziellen Oberflächenbehandlungen wie Schleifen oder Polieren. Die Regen-Erosionsbeständigkeit von Infrarot-Komponenten, speziell von IR-Fenstern und IR-Domen für das dritte atmosphärische Fenster wird insbesondere durch einen Polyethylenüberzug der Komponenten wesentlich erhöht.

Es wurde gefunden, daß die beanspruchten Stoffe eine gute Regen-Erosionsbeständigkeit besitzen. Die besten Ergebnisse wurden mit Polyethylen erzielt, insbesondere mit ultrahochmolekularem Polyethylen. Polyethylen besitzt ferner die gewünschten geringen Transmissions- und Reflexionsverluste im dritten atmosphärischen Fenster. Der teilkristalline Werkstoff ist zwar im sichtbaren Teil des Spektrums nur transparent, infolge der geringen Größe der Kristallite wird er jedoch mit wachsender Wellenlänge im fernen Infrarot durchsichtig.

Der Kristallinitätsgrad und das Gefüge (z.B. globulare Überstrukturen) sind in an sich bekannter Weise durch den molekularen Aufbau (Molekulargewicht, Linearität) sowie durch Wärmebehandlung beeinflußbar.

Die beanspruchten Schutzüberzüge können fest mit den Infrarot-Komponenten verbunden werden, z.B. durch Schmelzkleben. Es ist jedoch auch ein loser Verbund möglich, bei dem der Thermoplastüberzug z.B. auf die Infrarot-Komponenten gepresst wird. In diesem Falle können entstehende Spalte zwischen Thermoplastüberzug und Infrarot-Komponente durch eine Indexmatchingsubstanz ausgefüllt werden (z.B. Wachs).

Durch einen Teil der Überzüge, z.B. durch einen Polyethylenüberzug werden auch Antireflexschichten der optischen Komponenten geschützt, und zwar nicht nur gegenüber Regenerosion, sondern auch gegenüber Feuchtigkeit. Dies erlaubt den Einsatz selbst hygroskopischer Substanzen für Antireflexschichten.

Die Dicke der Überzüge ist beliebig einstellbar. Die Überzüge müssen so dick sein, daß eine Zerstörung des empfindlichen IR-Komponenten-Werkstoffes unter dem Überzug zuverlässig vermieden wird.

Es ist auch möglich, Infrarot-Komponenten (Fenster oder Dome) nicht nur mit Thermoplasten zu überziehen, sondern sie vollständig aus Thermoplasten herzustellen. Wegen der relativ geringen Festigkeit gängiger Thermoplastsorten ist diese Möglichkeit derzeit auf kleine Flächen oder Spezielfälle geringer mechanischer Belastung beschränkt. Die Verwendung von orien-

- 6 -

tierten, höchstfesten Thermoplasten, die z.B. durch die Methode der gerichteten Erstarrung hergestellt werden können, erlaubt es, Infrarot-Fenster und ähnliche Komponenten vollständig aus Thermoplasten herzustellen. Dabei ist die Anisotropie der relevanten Eigenschaften (Doppelbrechung, Regen-Erosionsbeständigkeit, Festigkeit) bei der Auslegung der Infrarot-Komponenten zu berücksichtigen.

Ein weiterer Vorteil der Erfindung ist die bekannt niedrige Wärmeleitfähigkeit und die bekannt niedrige Temperaturleitfähigkeit der verwendeten Thermoplaste. Gebräuchliche Infrarot-Fenster können durch die mit dem Flug verbundene aerodynamische Erwärmung und einen damit verbundenen Transemissionsverlust in ihrer Funktionsfähigkeit beeinträchtigt werden. So beginnt etwa Germanium bei Temperaturen von mehr als $60^O$ C seine Transparenz zu verlieren. Die Wärmeleitfähigkeit sowie die Temperaturleitfähigkeit der erfindungsgemäßen Kunststoff ist wesentlich geringer als die der üblichen IR-Fenster-Werkstoffe. So beträgt z.B. die Temperaturleitfähigkeit von Polyethylen O, 165 · $10^{-6}$ $m^2$/s und die Wärmeleitfähigkeit O,35 W/Km. Demgegenüber ist die Temperaturleitfähigkeit von Germanium mit 3,55 · $10^{-6}$ $m^2$/s um einen Faktor 21 und die Wärmeleitfähigkeit mit 5,86 W/Km um den Faktor 17 größer als die von Polyethylen.

Bei kurzzeitiger Beanspruchung, wie sie für bestimmte Flugkörper typisch sind, kann durch den Kunststoffüberzug eine

0137930

- 7 -

unzulässige hohe Erwärmung somit wirksam verhindert werden.

17. Juli 1984
Ka/mr

0137930

DORNIER SYSTEM GMBH
7990 Friedrichshafen

S 455 I/477

P a t e n t a n s p r ü c h e

1. Schutzüberzug oder Fenster für Infrarotgeräte für das dritte atmosphärische Fenster (8-13,5 $\mu$m) als Regenerosionsschutz an Fluggeräten oder als Feuchtigkeitsschutz an Schiffen,dadurch gekennzeichnet, daß der SChutzüberzug oder das Fenster aus infrarotdurchlässigem thermoplastischen Kunstoff besteht.

2. Schutzüberzug oder Fenster nach Anspruch 1, dadurch gekennzeichnet, daß der Schutzüberzug oder das Fenster aus Polyethylen, Polyetheretherketon, Polysulfon, Polyphenylenoxid, Perflouralkoxy-Copolymer, Polyethersulfon, Polyacetal, Polyamid, Polyprophylen oder einem flourhaltigen Thermoplast besteht.

3. Schutzüberzug oder Fenster nach Anspruch 1, dadurch gekennzeichnet, daß der Schutzüberzug oder das Fenster aus ultrahochmolekularem Polyethylen besteht.

4. Schutzüberzug oder Fenster nach einem der vorhergehenden Ansprüche, dadurch gekennzeichnet, daß der Schutzüberzug

- 2 -

oder das Fenster aus amorphem Material oder aus teilkristallinem Material mit Kristalliten kleiner als die
Infrarotwellenlänge besteht.

5. Fenster für ein Infrarotsystem, insbesondere IR-Fenster
oder IR-Dom, dadurch gekennzeichnet, daß es aus einem
orientierten höchstfesten Thermoplast besteht, der z.B.
durch gerichtete Erstarrung hergestellt wurde.

6. Verfahren zum Aufbringen eines Schutzüberzugs nach einem
der vorhergehenden Ansprüche auf ein Infrarotgerät, dadurch gekennzeichnet, daß der Schutzüberzug durch Schmelzkleben aufgebracht wird.

7. Verfahren zum Befestigen eines Fensters nach einem der
vorhergehenden Ansprüche an ein Infrarotgerät, dadurch gekennzeichnet, daß das Fenster auf das Infrarotgerät gepreßt wird und der Spalt dazwischen mit einer den Brechungsindices angepaßten Substanz gefüllt wird.

17. Juli 1984
Ka/mr